# EUROPÄISCHE PATENTSCHRIFT

(11) **EP 3 590 946 B1**
(45) Veröffentlichungstag und Bekanntmachung des Hinweises auf die Patenterteilung: **22.09.2021**
(21) Anmeldenummer: 19183332.6
(22) Anmeldetag: 28.06.2019
(51) Int. Cl.: C07F 7/18

(54) **VERFAHREN ZUR HERSTELLUNG VON ALKYLALKOXYSILANEN**
METHOD FOR THE PREPARATION OF ALKYLALKOXYSILANES
PROCÉDÉ DE FABRICATION D'ALKYLALKOXYSILANES

(30) Priorität: 03.07.2018 DE 102018210886
(43) Veröffentlichungstag der Anmeldung: 08.01.2020
(73) Patentinhaber: Evonik Operations GmbH, 45128 Essen (DE)
(72) Erfinder: Albert, Philipp, 79618 Rheinfelden (DE); Just, Eckhard, 79618 Rheinfelden (DE)
(74) Vertreter: Evonik Patent Association

(56) Entgegenhaltungen:
- JP-B2- 4 540 141

## Beschreibung

Die vorliegende Erfindung betrifft ein besonders wirtschaftliches Verfahren zur Herstellung von längerkettigen Alkylalkoxysilanen aus einem Alken [nachfolgend auch Olefin oder Olefinkomponente genannt] und einem Hydrogentrialkoxysilan, Hydrogenalkyldialkoxysilan bzw. Hydrogendialkylalkoxysilan [nachfolgend auch kurz H-Silan(e) genannt] in Gegenwart eines Pt-Katalysators, einer Carbonsäure und eines weiteren Cokatalysators mittels Hydrosilylierung.

Alkylalkoxysilane sind aufgrund der Alkylgruppe hydrophob und sind heutzutage wichtige chemische Verbindungen. Daraus ergeben sich vielseitige Anwendungen. Sie können z.B. als hydrophobe Komponente in Sol-Gel-Systemen eingesetzt werden oder pur bzw. in Formulierungen auf den unterschiedlichsten Substarten aufgetragen werden, um einen hydrophoben Effekt zu erzielen. Typische Anwendungen sind die Hydrophobierung von Füllstoffen, von Beton und weiteren anorganischen Materialien. Sie können aber auch in Lacken als Additiv verwendet werden.

Verfahren zur Hydrosilylierung sind lange bekannt und vielfältig beschrieben.

JP4266400B beschreibt die Herstellung einer aromatischen Silanverbindung durch Hydrosilylierung einer aromatischen Vinylverbindung. Als Katalysator wird ein Platinkomplex in Anwesenheit einer Carbonsäure eingesetzt.

US 5,986,124 betrifft ein Verfahren zur Herstellung einer Silanverbindung durch Hydrosilylierung einer Kohlenstoffdoppelbindung mittels eines Trialkoxyhydrogensilans in Anwesenheit eines Platinkatalysators und einer Carbonsäure. Gemäß Beispiel 1 wird ein molares Trialkoxyhydrogensilan/Carbonsäure-Verhältnis von 1 zu 26x10⁻³ sowie in Beispiel 2 eines von 1 zu 13x10⁻³ eingesetzt. Durch den Einsatz von Platinkatalysatoren mit Carbonsäuren kann bei der Hydrosilylierung zwar ein Umsatz von ca. 80 % erreicht werden, jedoch weisen so erhaltene Rohprodukte noch einen erheblichen Anteil an Verunreinigungen bzw. Nebenprodukte auf.
EP 0587462 beschreibt eine Zusammensetzung aus einem ungesättigten Polyorganosiloxan, einem Organowasserstoffpolysiloxan, einer Säure, einer Platinverbindung sowie Additiven, wobei die Komponenten in Wasser emulgiert und zur Trennschichtbehandlung eingesetzt werden. Die Vemetzung über eine Hydrosilylierung erfolgt beim Erwärmen.
EP 0856517 offenbart einen Prozess zur Hydrosilylierung einer ungesättigten Verbindung in Anwesenheit einer Metallverbindung der 8. bis 10. Nebengruppe des Periodensystems der Elemente. Die Hydrosilylierung wird in Anwesenheit eines Beschleunigers durchgeführt.
US 2013/0158281 offenbart einen Prozess zur Hydrosilylierung einer ungesättigten Verbindung mit einem Silylhydrid. Als Katalysator werden Fe-, Ni-, Mn- oder Co-Komplexe verwendet.
CS 195549 betrifft die Hydrosilylierung von Vinylcyclohexan mit Hydrogensilanen. Dabei wird in Beispiel 4 Vinylcyclohexan mittels Triethoxysilan in Gegenwart von Platinsäure und Trifluoressigsäure hydrosilyliert.

Der vorliegenden Erfindung lag die Aufgabe zugrunde, ein möglichst wirtschaftliches Verfahren zur Herstellung von Alkylalkoxysilanen bereitzustellen, bei dem Alkyl insbesondere -aber nicht ausschließlich- für C₃- bis C₂₀-Alkyle sowie Alkoxy für Methoxy, Ethoxy oder Propoxy stehen, man einen Pt-Katalysator in Verbindung mit einer Carbonsäure als Cokatalysator einsetzt, wobei der Anteil an Carbonsäure, der im Produkt verbleibt, möglichst gering sein soll. Darüber hinaus war man bestrebt die zuvor aufgezeigten Nachteile zusätzlich durch eine gezielte Reaktionsführung, durch gezielte Einsatzstoffverhältnisse und/oder weiterer Zusätze mindern. Ferner bestanden auch die Anliegen, das Verfahren mit einer möglichst geringen Konzentration an teurem Platin sowie ohne den gesonderten Zusatz eines aliphatischen oder aromatischen Lösemittels durchzuführen und die Ausbeute an Zielprodukt nach Möglichkeit zu steigern.

JP 4540141 beschreibt ein Verfahren zur Hydrosilylierung von Olefinen, bei dem zunächst Olefin, Hydrogenalkoxysilan und Lösungsmittel vorgelegt werden, dann erst die Säure und danach der Platinkatalysator zugegeben werden, bevor die so erhaltene Mischung erhitzt wird. Dieses Verfahren hat zum einen den Nachteil einer vergleichsweisen geringen Ausbeute und Selektivität, zum anderen aber auch den einer unkontrollierbaren Wärmetönung, wodurch dieses Verfahren großtechnisch nicht anwendbar ist.

Die Aufgabe wird erfindungsgemäß entsprechend den Merkmalen in den Patentansprüchen gelöst.

Überraschenderweise wurde gefunden, dass wesentlich bessere Ausbeuten an Zielprodukt, d. h. einem Alkylalkoxysilan, erzielt werden, wenn man bei der Durchführung der Hydrosilylierung das Hydrogenalkoxysilan [auch kurz H-Silan genannt] zusammen mit einem Pt-Katalysator vorlegt, das vorgelegte Gemisch erwärmt und anschließend unter Durchmischung die Olefinkomponente zusammen mit einer Carbonsäure über eine definierte Zeitspanne in die Vorlage dosiert und nachreagieren lässt, wobei man vorteilhaft eine kleine Menge eines weiteren Cokatalysators zum Olefin-Carbonsäure-Gemisch in Form mindestens eines Alkohols zusetzt, insbesondere tert.-Butanol, und so die Umsetzung sowie die Selektivität und damit die Ausbeute der Hydrosilylierung nochmals deutlich fördert. So kann das molare Verhältnis des H-Silans zu Carbonsäure auf ein molares Verhältnis von 1 zu ≤ 10x 10⁻³, insbesondere auf 1 zu ≤ 6x 10⁻³, vorteilhaft gesenkt werden, was sich positiv auf den Restgehalt an Carbonsäure im Produkt und vorteilhaft auf dessen Applikationseigenschaften auswirkt.

Dabei hat sich als besonders vorteilhaft erwiesen, das man das vorliegende Verfahren vorzugsweise mit einem homogen Platin(0)-Komplexkatalysator, insbesondere einem "Karstedt-Katalysator", einem Speyer-Katalysator, Hexachloroplatin(IV)säure, oder einem geträgerten, d.h. heterogen Pt-Katalysator, beispielsweise Pt auf Aktivkohle, durchführt. Darüber hinaus setzt man einen Karstedt-Katalysator bevorzugt als Platin(0)-Komplexkatalysator-Lösung ein, insbesondere gelöst in Xylol oder Toluol. Ferner ermöglicht es die vorliegende Verfahrensweise, den Gehalt an Pt-Katalysator bzw. Pt-Verlust zu verringern und so teures Pt einzusparen. Weiter hat sich beim vorliegenden Verfahren als besonders vorteilhaft erwiesen, eine Carbonsäure aus der Reihe Benzoesäure, 3,5-Di-tert-butylbenzoesäure und/oder 3,5-Di-tert-butyl-4-hydroxy-benzoesäure einzusetzen.

Ein nach dem vorliegenden Verfahren erhaltenes Produktgemisch arbeitet man geeigneterweise durch Destillation, optional unter vermindertem Druck, auf und gewinnt das gewünschte (Ziel-)Produkt. Bei Einsatz eines Heterogenkatalysators kann man diesen geeigneterweise vor der Destillation vom Produktgemisch trennen, beispielsweise durch Filtration oder Zentrifugieren, und kann diesen so zurückgewonnen Pt-Katalysator vorteilhaft in den Prozess recyclieren.

So gewinnt man das Zielprodukt als Sumpfprodukt bei der nach der Reaktion sowie ggf. nach der Abtrennung eines Heterogenkatalysators durchgeführten Destillation; das Zielprodukt wird bei der destillativen Aufarbeitung nicht überdestilliert und fällt als farbloses Sumpfprodukt an. Sollte eine besonders hohe Reinheit gefordert sein, kann das Produkt zusätzlich destilliert werden. Darüber hinaus kann man das vorliegende Verfahren besonders wirtschaftlich schon bei einer vergleichsweise niedrigen Temperatur von 30 - 60 °C durchführen.

Gemäß dem vorliegenden Verfahren können so die Doppelbindungen der hier eingesetzten Olefinkomponente vorteilhaft praktisch vollständig hydrosilyliert werden und es entstehen vorteilhaft nur sehr wenige Nebenprodukte.

Darüber hinaus kann das vorliegende, d.h. erfindungsgemäße Verfahren vorteilhaft ohne einen gesonderten Zusatz eines aliphatischen oder aromatischen Kohlenwasserstoffs als Löse- bzw. Verdünnungsmittel und einem nur geringen Anteil an der (Co-)Katalysatorkomponente Carbonsäure, die im Zielprodukt verbleibt, durchgeführt werden.

Gegenstand der vorliegenden Erfindung ist somit ein Verfahren zur Herstellung eines C₃- bis C₂₀-Alkyltrialkoxysilans durch Hydrosilylierung, wobei Alkoxy für Methoxy, Ethoxy oder Propoxy steht, indem man
- ein Gemisch aus mindestens einem Hydrogenalkoxysilan aus der Reihe Hydrogentrialkoxysilan, Hydrogenalkyldialkoxysilan, Hydrogendialkylalkoxysilan [nachfolgend auch kurz H-Silan genannt] und einem Pt-Katalysator vorlegt,
- das Gemisch auf eine Temperatur von 30 bis 60 °C erwärmt,
- anschließend unter Durchmischung einen omega- bzw. einfach-ungesättigten C₃- bis C₂₀-Kohlenwassserstoff [nachfolgend auch kurz Olefinkomponente genannt], mindestens eine Carbonsäure und mindestens einen Alkohol als Cokatalysatoren zusetzt bzw. dosiert,
- reagieren lässt und anschließend das so erhaltene Produktgemisch aufarbeitet.

Beim erfindungsgemäßen Verfahren setzt man H-Silan zu Olefinkomponente vorteilhaft in einem molaren Verhältnis von 1 zu 1 bis 1,2, vorzugsweise von 1 zu 1,05 bis 1,2 ein, insbesondere - um hier stellvertretend und beispielhaft nur einige der möglichen und für den Fachmann aus den vorangehenden bzw. vorliegenden Angaben ersichtlichen bzw. erschließbaren Zwischenwerte zu nennen - 1 : 1,01, 1 : 1,03, 1 : 1,08, 1 : 1,1, 1 : 1.13, 1 : 1,15. 1 : 1,18.

Dabei setzt man als H-Silan bevorzugt Hydrogentrimethoxysilan (TMOS), Hydrogentriethoxysilan (TEOS), Methyldiethoxysilan (DEMS), Methyldimethoxysilan (DMMS), Dimethylethoxysilan (DMES), Dimethylmethoxysilan (MDMS), Hydrogentripropoxysilan, Hydrogenmethyldipropoxysilan und/oder Hydrogendimethylpropoxysilan ein.

Ferner wird beim erfindungsgemäßen Verfahren als Olefinkomponente bevorzugt Hexadecen-1 eingesetzt.

Vorteilhaft bevorzugt man beim erfindungsgemäßen Verfahren den Einsatz von H-Silan zu Alkohol in einem molaren Verhältnis von 1 zu 0,01 bis 0,2, vorzugsweise 1 zu 0,02 bis 0,18, besonders vorzugsweise 1 zu 0,02 bis 0,15, ganz besonders vorzugsweise 1 zu 0,025 bis 0,1, insbesondere 1 zu 0,03 bis 0,06. Vorzugsweise wählt man dazu als Alkohol tert.-Butanol aus.

Ferner setzt man beim erfindungsgemäßen Verfahren H-Silan zu Pt vorteilhaft in einem molaren Verhältnis von 1 zu 1 x10⁻⁴ bis 1 x10⁻⁹, vorzugsweise 1 zu 1x10⁻⁵ bis 1 x10⁻⁸, insbesondere von 1 zu 1x10⁻⁵ bis 9 x10⁻⁶, ein.

Dabei verwendet man als Pt-Katalysator geeigneterweise einen Pt-Heterogenkatalysator, vorzugsweise Pt aufgebracht auf einem festen Katalysatorträger, insbesondere Pt auf Aktivkohle, oder einen Pt-Homogenkatalysator, vorzugsweise einen Pt-Komplexkatalysator, wie Hexachloroplatin(IV)säure, auch "Speyer-Katalysator" genannt, insbesondere Hexachloroplatin(IV)säure gelöst in Aceton, vorzugsweise einen Pt(0)-Komplexkatalysator, besonders vorzugsweise einen Karstedt-Katalystor, ganz besonders vorzugsweise einen Platin(0)-1,3-Divinyl-1,1,3,3-Tetramethyldisiloxan-Komplex, insbesondere einen Karstedt-Katalysator in Xylol oder Toluol mit einem Gehalt an Pt(0) von 0,5 bis 5 Gew.-%. Eine solche Lösung enthält in der Regel einen Platin(0) 3-Divinyl-1,1,3,3-Tetramethyldisiloxan Komplex gelöst in Xylol oder Toluol, wobei man eine erfindungsgemäß verwendete Lösung vorteilhaft in verdünnter Form einsetzt und diese vorzugsweise einen Pt-Gehalt von 0,5 bis 5 Gew.-% aufweist. So setzt man beim erfindungsgemäßen Verfahren vorteilhaft einen Pt-Katalysator aus der Reihe Karstedt-Katalysator, insbesondere eine Karstedt-Katalysator-Lösung, vorzugsweise Platin(0)-1,3-Divinyl-1,1,3,3-Tetramethyldisiloxan-Komplex in Xylol oder Toluol mit einem Gehalt an Pt(0) von 0,5 bis 5 Gew.-%, Hexachloroplatin(IV)säure, vorzugsweise Speyer-Katalysator, insbesondere Hexachloroplatin(IV)säure gelöst in Aceton, oder Pt geträgert auf Aktivkohle ein.

Weiter setzt man erfindungsgemäßen Verfahren H-Silan zu Carbonsäure vorzugsweise in einem molaren Verhältnis von 1 zu 1 x10⁻³ bis 10 x10⁻³, besonders vorzugsweise 1 zu 1 x10⁻³ bis 8 x10⁻³, insbesondere von 1 zu 2 x10⁻³ bis 6 x10⁻³, ein.

Vorteilhaft wählt man die Carbonsäure aus der Reihe Benzoesäure, 3,5-Di-tert-butylbenzoesäure und 3,5-Di-tert-butyl-4-hydroxy-benzoesäure aus.

Bevorzugt führt man das erfindungsgemäße Verfahren aus indem man
- die Komponenten H-Silan und Pt-Katalysator als Gemisch vorlegt und erwärmt,
- Olefinkomponente, Carbonsäure und Alkohol zusammenbringt und das Gemisch enthaltend Olefinkomponente, Carbonsäure und Alkohol bei einer Temperatur in der Vorlage von 30 - 60°C unter Durchmischung über eine Zeitspanne von 1 bis 10 Stunden in die Vorlage dosiert und
- nachfolgend über eine Zeitspanne von 0,2 bis 2 Stunden nachreagieren lässt, vorzugsweise führt man die Umsetzung unter Schutzgas durch, insbesondere unter Stickstoff, optional kann man -sofern ein Heterogenkatalysator vorliegt- diesen aus dem so erhaltenen Produktgemisch entfernen,
- die anschließende destillative Aufarbeitung des erhaltenen Produktgemischs führt man bevorzugt bei 45-150°C und einem verminderten Druck aus, wobei man insbesondere vorliegende Tiefsieder, beispielsweise Xylol bzw. Toluol, Alkohol, Carbonsäure, überschüssiges H-Silan bzw. ggf. Olefinkomponente, aus dem Produktgemisch entfernt und das (Ziel-) Produkt gewinnt.

So kann man im Allgemeinen das erfindungsgemäße Verfahren -mit all seinen Kombinationsmöglichkeiten der in der vorliegenden Beschreibung dargelegten Merkmalewie folgt ausführen:
Für die Durchführung der erfindungsgemäßen Hydrosilylierung zur Herstellung eines Alkylmethoxy- oder Alkylethoxysilans mit langen Alkylketten legt man das Hydrogenalkoxysilan (H-Silan), vorzugsweise Trimethoxysilan (TMOS), Triethoxysilan (TEOS-H), Methyldiethoxysilan (DEMS), Methyldimethoxysilan (DMMS), Dimethylethoxysilan (DMES), Dimethylmethoxysilan (MDMS), Hydrogentripropoxysilan, Hydrogenmethyldipropoxysilan und/oder Hydrogendimethylpropoxysilan, zusammen mit einem Platin-Katalysator, geeigneterweise einem "Speyer-Katalysator", vorzugsweise Hexachloroplatin(IV)säure in Aceton bzw. Hexachloroplatin(IV)säure-Hexahydrat in Aceton gelöst) oder einem "Karstedt-Katalysator", wobei dieser bevorzugt als Platin(0)-Komplexkatalysator-Lösung eingesetzt wird, oder Pt auf A-Kohle in einem Rührreaktor mit Dosier-, Heiz-/Kühl-, Rückfluß- sowie Destillationsvorrichtung vor, geeigneterweise unter Schutzgas, beispielsweise Stickstoff, und erwärmt das vorgelegte Gemisch vorteilhaft auf eine Temperatur von 30 bis 60 °C. Anschließend gibt man unter Durchmischung die Olefinkomponente, mindestens eine Carbonsäure, vorzugsweise Benzoesäure, 3,5-Di-tert-butylbenzoesäure und/oder 3,5-Di-tert-butyl-4-hydroxy-benzoesäure und mindestens einen Alkohol, wie zum Beispiel einem der zuvor genannten C₁-C₁₀-Alkohole, insbesondere t-Butanol, als weiteren so genannten Co-Katalysator zu bzw. dosiert: Dabei kann man die Komponenten Olefin, Carbonsäure und Alkohol einzeln nacheinander oder vorteilhaft als Olefin-Carbonsäure-Alkohol-Gemisch über eine definierte Zeitspanne, vorzugsweise unter Temperaturkontrolle und über 1 bis 10 oder mehr Stunden, wobei die Dosierzeit freilich von der Ansatzgröße und dem Reaktordesign abhängig sein kann, in das Hydrogenalkoxysilan-Platin(0)-Komplexkatalysator-Gemisch der Vorlage portionsweise oder kontinuierlich zusetzen bzw. dosieren und lässt das Reaktions- bzw. Produktgemisch nachreagieren, vorzugsweise unter Durchmischung und Temperaturkontrolle, geeigneterweise bei einer Temperatur von 60-100°C, insbesondere über 0,5 bis 2 Stunden. So setzt man bei vorliegenden Verfahren die jeweiligen Einsatzstoffe bevorzugt einem wohl definierten molaren Verhältnis ein:
- H-Silan zu Olefinkomponente in einem molaren Verhältnis von 1 zu 1 bis 1,2
- H-Silan zu Alkohol in einem molaren Verhältnis von 1 zu 0,01 bis 0,2
- H-Silan zu Pt in einem molaren Verhältnis von 1 zu 1 x10⁻⁴ bis 1 x10⁻⁹
- H-Silan zu Carbonsäure in einem molaren Verhältnis von 1 zu 1 x10⁻³ bis 10 x10⁻³ Ferner stellt man die verwendete Karstedt-Katalysator-Lösung bevorzugt aus einem handelsüblichen so genannten Karstedt-Konzentrat (Platin(0) 1,3-Divinyl-1,1,3,3-Tetramethyldisiloxan Komplex, Platingehalt: 20,37 Gew.-%) her, wobei man das Konzentrat vorzugsweise durch den Zusatz von Xylol bzw. Toluol auf einen Pt-Gehalt von 0,5 bis 5 Gew.-% einstellt. Ein so erhaltenes Produktgemisch arbeitet man geeigneterweise durch Destillation auf und gewinnt so das gewünschte (Ziel-)Produkt. Dazu führt man die Destillation bevorzugt beginnend bei 45°C bis 150°C und einem verminderten Druck (Vakuumdestillation bei kleiner 1 bar fallend, insbesondere kleiner gleich 0,1 bar) durch, wobei insbesondere vorliegende Tiefsieder, beispielsweise Alkohol, überschüssiges H-Silan bzw. ggf. noch vorliegende Olefinkomponente aus dem Produktgemisch entfernt werden. Sofern ein Pt-Heterogen-katalysator für die Durchführung des erfindungsgemäßen Verfahrens eingesetzt wird, kann man den Pt-Heterogenkatalysator im Rahmen der Produktausarbeitung aus dem nach der Umsetzung erhaltenen Produktgemisch, d.h. vor dem Destillationsschritt, abtrennen, beispielsweise durch Filtration oder zentrifugieren, und vorteilhaft wieder in den Prozess zurückführen. Um höhere Reinheiten zu erreichen, kann das Produkt aber auch über Kopf destilliert werden.

So können erfindungsgemäß Alkylalkoxysilane mit einer langkettigen Alkylgruppe, insbesondere einem Hecadecyltrimethoxysilan sowie einem Hexadecyltriethoxysilan, in besonders einfacher und wirtschaftlicher Weise mit hoher Ausbeute und Selektivität, d.h. mit nur geringen Anteilen an Nebenprodukten, vorteilhaft auch großtechnisch hergestellt werden.

Die nachfolgenden Beispiele erläutern die vorliegende Erfindung zusätzlich, ohne den Gegenstand zu beschränken:

### Beispiele:

### Analytische Untersuchungen

Die Umsetzungen wurden mittels GC-Messungen verfolgt.
GC-Säule: HP-5; Länge: 30 m; Durchmesser: 530 µm
Injektionsvolumen: 0,4 µl
Temperaturprogramm: 120°C-2 min.-15°C/min.-275°C-20 min.

### Verwendete Chemikalien:

Karstedt Konzentrat (Platin(0) 1,3-Divinyl-1,1,3,3-Tetramethyldisiloxan Komplex,
Platingehalt: 20,37 Gew.-%), HERAEUS
Aceton, rein, LABC Labortechnik
Hexachloroplatin(IV)säure-hexahydrat, Platingehalt 40 Gew.-%, HERAEUS
Platin-Aktivkohle, Hydrierkatalysator, Platingehalt 10 Gew.-%, MERCK
Xylol Technical, VWR Chemicals
Dynasylan® TMOS (Trimethoxysilan), EVONIK Industries
Dynasylan® TEOS-H (Triethoxysilan), EVONIK Industries
Dynasylan® DEMS (Methyldiethoxysilan), EVONIK Industries
Dynasylan® DMES (Dimethylethoxysilan), EVONIK Industries
1-Hexadecen, Dow Corning
Benzoesäure ≥ 99,5 Gew.-%, ROTH
3,5-Di-tert-butylbenzoesäure >98,0 Gew.-%, TOKYO CHEMICAL INDUSTRY
3,5-Di-tert-butyl-4-hydroxybenzoesäure, > Gew.-98,0 %, TOKYO CHEMICAL INDUSTRY Essigsäure, ≥ 99 Gew.-%, SIGMA-ALDRICH
tert.-Butanol, ≥ 99,0 Gew.-% (zur Synthese), ROTH

### Herstellung Karstedt Katalysator Nr.1 mit 2 Gew.-% Platin Gehalt in Xylol:

In einer 0,2 l Glasflasche wurden 9,8 g Karstedt Konzentrat (Platin(0) 1,3-Divinyl-1,1,3,3-Tetramethyldisiloxan Komplex, Platin Gehalt 20,37 %) mit 90,2 g Xylol vermischt.

### Vergleichsbeispiel 1 angelehnt an US 5,986,124, Beispiel 1, sowie mit einem verringerten Anteil an Carbonsäure:

128,3 g Dynasylan® TMOS (1,05 Mol), 0,2 g Karstedt Katalysator (entspricht 0,02563 mMol Pt) wurden in einer 0,5 I-Rührapparatur mit Rückflußkühler, Dosiervorrichtung vorgelegt. Bei einer Temperatur von 41 - 56°C wurde eine Mischung bestehend aus 224,4 g Hexadecen (1,0 Mol) und 0,393 g Essigsäure (6,55 mMol) innerhalb 39 Minuten dosiert. Danach wurde das Gemisch noch 3/4 Stunde bei 55°C gehalten. Anschließend wurden 17,2 g Leichtsieder bei 76-123°C und einem Druck von < 0,1 mbar entfernt. Dabei wurden 331,3 g Sumpfprodukt erhalten.

**Die GC-Analyse des Sumpfprodukts ergab folgende Zusammensetzung:**

| Summe C16 Olefin GC-WLD-FL% | n-C16-Silan GC-WLD-FL% | Summe C16-Silan GC-WLD-FL% | Rest GC-WLD-FL% |
|---|---|---|---|
| 9,8 | 89,0 | 89,5 | 0,7 |

### Beispiel 1

128,3 g Dynasylan® TMOS (1,05 Mol), 0,2 g Karstedt Katalysator (entspricht 0,02563 mMol Pt) wurden in einer 0,5 I-Rührapparatur mit Rückflußkühler, Dosiervorrichtung vorgelegt. Bei einer Temperatur von 33- 48°C wurde eine Mischung bestehend aus 224,4 g 1-Hexadecen (1,0 Mol), 0,800 g Benzoesäure (6,55 mMol) sowie 2,5 g t-Butanol (33,73 mMol) innerhalb 2 Stunden dosiert. Danach wurde das Gemisch noch 3/4 Stunde bei 47°C gehalten. Anschließend wurden 12,1 g Leichtsieder bei 42-111°C und einem Druck von < 0,1 mbar entfernt. Dabei wurden 339,8 g Sumpfprodukt erhalten. Die GC-Analyse des Sumpfprodukts ergab folgende Zusammensetzung:

| Summe C16 Olefin GC-WLD-FL% | n-C16-Silan GC-WLD-FL% | Summe C16-Silan GC-WLD-FL% | Rest GC-WLD-FL% |
|---|---|---|---|
| 5,8 | 89,6 | 92,7 | 1,5 |

### Beispiel 2

128,3 g Dynasylan® TMOS (1,05 Mol), 0,2 g Karstedt Katalysator (entspricht 0,02563 mMol Pt) wurden in einer 0,5 I-Rührapparatur mit Rückflußkühler, Dosiervorrichtung vorgelegt. Bei einer Temperatur von 48 - 57°C wurde eine Mischung bestehend aus 224,4 g 1-Hexadecen (1,0 Mol) und 1,64 g 3,5-Di-tert-butylhydroxybenzoesäure (6,55 Mol) sowie 2,5 g t-Butanol (33,73 mMol) innerhalb 1 3/4 Stunden dosiert. Danach wurde das Gemisch noch 3/4 Stunde bei 55°C gehalten. Anschließend wurden 13,9 g Leichtsieder bei 31-110°C und einem Druck von < 0,1 mbar entfernt. Dabei wurden 337,4 g Sumpfprodukt erhalten. Die GC-Analyse des Sumpfprodukts ergab folgende Zusammensetzung:

| Summe C16 Olefin GC-WLD-FL% | n-C16-Silan GC-WLD-FL% | Summe C16-Silan GC-WLD-FL% | Rest GC-WLD-FL% |
|---|---|---|---|
| 6,3 | 91,0 | 92,9 | 0,8 |

### Beispiel 3

172,5 g Dynasylan® TEOS (1,05 Mol), 0,2 g Karstedt Katalysator (entspricht 0,02563 mMol Pt) wurden in einer 1 I-Rührapparatur mit Rückflusskühler, Dosiervorrichtung vorgelegt. Bei einer Temperatur von 45 - 46°C wurde eine Mischung bestehend aus 224,4 g 1-Hexadecen (1,0 Mol) und 0,800 g Benzoesäure (6,55 mMol) sowie 2,5 g t-Butanol (33,73 mMol) (33,73 mMol) innerhalb 1 Stunde dosiert. Danach wurde das Gemisch noch 1/2 Stunde bei 46°C gehalten. Anschließend wurden 20,1 g Leichtsieder bei 58-144°C und einem Druck von < 0,1 mbar entfernt. Dabei wurden 376,4 g Sumpfprodukt erhalten. Die GC-Analyse des Sumpfprodukts ergab folgende Zusammensetzung:

| Summe C16 Olefin GC-WLD-FL% | n-C16-Silan GC-WLD-FL% | Summe C16-Silan GC-WLD-FL% | Rest GC-WLD-FL% |
|---|---|---|---|
| 5,3 | 91,2 | 94,1 | 0,6 |

### Beispiel 4

141,0 g Dynasylan® DEMS (1,05 Mol), 0,2 g Karstedt Katalysator (entspricht 0,02563 mMol Pt) wurden in einer 1 I-Rührapparatur mit Rückflusskühler, Dosiervorrichtung vorgelegt. Bei einer Temperatur von 41 - 47°C wurde eine Mischung bestehend aus 224,4 g 1-Hexadecen (1,0 Mol) und 0,800 g Benzoesäure (6,55 mMol) sowie 2,5 g t-Butanol (33,73 mMol) (33,73 mMol) innerhalb 1 Stunde dosiert. Danach wurde das Gemisch noch 1/2 Stunde bei 46°C gehalten. Anschließend wurden 16,3 g Leichtsieder bei 40-125°C und einem Druck von < 0,1 mbar entfernt. Dabei wurden 348,1 g Sumpfprodukt erhalten. Die GC-Analyse des Sumpfprodukts ergab folgende Zusammensetzung:

| Summe C16 Olefin GC-WLD-FL% | n-C16-Silan GC-WLD-FL% | Summe C16-Silan GC-WLD-FL% | Rest GC-WLD-FL% |
|---|---|---|---|
| 5,1 | 91,8 | 94,1 | 0,8 |

Die nachfolgende Tabelle zeigt in einer zusammenfassenden Gegenüberstellung die Versuchsergebnisse hinsichtlich Ausbeute und Selektivität aus den zuvor aufgeführten Beispielen.

So kann durch das erfindungsgemäße Verfahren vorteilhaft eine nochmalige Verbesserung an Ausbeute und Produktselektivität erzielt werden.

| Versuch-Nr. (Produkt) | C₁₆-Olefin GC-WLD-FL% | n-C₁₆-Alkylalkoxysilan GC-WLD-FL% | Summe C₁₆-Alkylalkoxysilan GC-WLD-FL% | Rest GC-WLD-FL% |
|---|---|---|---|---|
| Vergleichsbeispiel 1 (Hexadecyltrimethoxysilan) | 9,8 | 89,0 | 89,5 | 0,7 |
| Beispiel 1 (Hexadecyltrimethoxysilan) | 5,8 | 89,6 | 92,7 | 1,5 |
| Beispiel 2 (Hexadecyltrimethoxysilan) | 6,3 | 91,0 | 92,9 | 0,8 |
| Beispiel 3 (Hexadecyltriethoxysilan) | 5,3 | 91,2 | 94,1 | 0,6 |
| Beispiel 4 (Hexadecyl-methyldiethoxysilan) | 5,1 | 91,8 | 94,1 | 0,8 |

Die erfindungsgemäßen Versuche zeigen, dass durch die Kombination der Maßnahmen, "Verfahrensablauf/-bedingungen", "Verringerung des Cokatalysatoranteils Carbonsäure bezogen auf das H-Silan" und "Zusatz eines weiteren Cokatalysators in Form eines Alkohols" eine nochmalige Verbesserung der Ausbeute an Zielprodukt erzielt und gleichzeitig der Anteil an Carbonsäure, der im Produkt verbleibt, gesenkt werden kann.

## Patentansprüche

1. Verfahren zur Herstellung eines C₃- bis C₂₀-Alkyltrialkoxysilans durch Hydrosilylierung, wobei Alkoxy für Methoxy, Ethoxy oder Propoxy steht, indem man
- ein Gemisch aus mindestens einem Hydrogenalkoxysilan aus der Reihe Hydrogentrialkoxysilan, Hydrogenalkyldialkoxysilan, Hydrogendialkylalkoxysilan und einem Pt-Katalysator vorlegt,
- das Gemisch auf eine Temperatur von 30 bis 60 °C erwärmt,
- anschließend unter Durchmischung einen omega- bzw. einfach-ungesättigten C₃- bis C₂₀-Kohlenwassserstoff, mindestens eine Carbonsäure und mindestens einen Alkohol als Cokatalysatoren zusetzt bzw. dosiert,
- reagieren lässt und anschließend das so erhaltene Produktgemisch aufarbeitet.

2. Verfahren nach Anspruch 1, **dadurch gekennzeichnet,**
**dass** man H-Silan zu Alkohol in einem molaren Verhältnis von 1 zu 0,01 bis 0,2, vorzugsweise 1 zu 0,02 bis 0,18, besonders vorzugsweise 1 zu 0,03 bis 0,15, ganz besonders vorzugsweise 1 zu 0,04 bis 0,1, insbesondere 1 zu 0,05 bis 0,06, einsetzt.

3. Verfahren nach Anspruch 1 oder 2, **dadurch gekennzeichnet,**
**dass** man H-Silan zu Pt in einem molaren Verhältnis von 1 zu 1 x10⁻⁴ bis 1 x10⁻⁹, vorzugsweise 1 zu 1 x10⁻⁵ bis 3 x10⁻⁸, insbesondere 1 zu 1 x10⁻⁵ bis 9,0 x10⁻⁶, einsetzt.

4. Verfahren nach einem der vorangehenden Ansprüchen, **dadurch gekennzeichnet, dass** man H-Silan zu Carbonsäure in einem molaren Verhältnis von 1 zu 1 x10⁻³ bis 10x10⁻³, vorzugsweise 1 zu 2x10⁻³ bis 8x10⁻³, insbesondere 1 zu 2x10⁻³ bis 6x10⁻³, einsetzt.

5. Verfahren nach einem der vorangehenden Ansprüchen, **dadurch gekennzeichnet, dass** man H-Silan zu Olefinkomponente in einem molaren Verhältnis von 1 zu 1 bis 1,2, vorzugsweise von 1 zu 1,05 bis 1,2, einsetzt.

6. Verfahren nach einem der vorangehenden Ansprüchen, **dadurch gekennzeichnet, dass** man die Carbonsäure aus der Reihe Benzoesäure, 3,5-Di-tert-butylbenzoesäure, 3,5-Di-tert-butyl-4-hydroxy-benzoesäure auswählt.

7. Verfahren nach einem der vorangehenden Ansprüchen, **dadurch gekennzeichnet, dass** man den Alkohol aus der Reihe der C₁-C₁₀-Alkohole auswählt, vorzugsweise t-Butanol.

8. Verfahren nach einem der vorangehenden Ansprüchen, **dadurch gekennzeichnet, dass** man als H-Silan Hydrogentrimethoxysilan (TMOS), Hydrogentriethoxysilan (TEOS), Methyldiethoxysilan (DEMS), Methyldimethoxysilan (DMMS), Dimethylethoxysilan (DMES), Dimethylmethoxysilan (MDMS), Hydrogentripropoxysilan, Hydrogenmethyldipropoxysilan und/oder Hydrogendimethylpropoxysilan einsetzt.

9. Verfahren nach einem der vorangehenden Ansprüchen, **dadurch gekennzeichnet, dass** man einen Pt-Katalysator aus der Reihe "Karstedt-Katalysator", vorzugsweise Platin(0)-1,3-Divinyl-1,1,3,3-Tetramethyldisiloxan-Komplex, insbesondere als "Karstedt-Katalysator" in Xylol oder Toluol mit einem Gehalt an Pt(0) von 0,5 bis 5 Gew.-%, Hexachloroplatin(IV)säure, vorzugsweise "Speyer-Katalysator", insbesondere Hexachloroplatin(IV)säure gelöst in Aceton, oder Pt aufgebracht auf einem festen Katalysatorträger, vorzugsweise Pt geträgert auf Aktivkohle, einsetzt.

10. Verfahren nach einem der vorangehenden Ansprüchen, **dadurch gekennzeichnet, dass** man
- die Komponenten H-Silan und Pt-Katalysator als Gemisch vorlegt und erwärmt,
- Olefinkomponente, Carbonsäure und Alkohol zusammenbringt und das Gemisch enthaltend Olefinkomponente, Carbonsäure und Alkohol bei einer Temperatur in der Vorlage von 30 - 60 °C unter Durchmischung über eine Zeitspanne von 1 bis 10 Stunden in die Vorlage dosiert und
- nachfolgend über eine Zeitspanne von 0,2 bis 2 Stunden nachreagieren lässt, vorzugsweise führt man die Umsetzung unter Schutzgas durch, insbesondere unter Stickstoff, optional kann man -sofern ein Heterogenkatalysator vorliegtdiesen aus dem so erhaltenen Produktgemisch entfernen,
- die anschließende destillative Aufarbeitung des erhaltenen Produktgemischs führt man bevorzugt bei 45 - 150 °C und einem verminderten Druck aus, wobei man insbesondere vorliegende Tiefsieder, beispielsweise Xylol bzw. Toluol, Alkohol, Carbonsäure, überschüssiges H-Silan bzw. ggf. Olefinkomponente, aus dem Produktgemisch entfernt und das (Ziel-)Produkt gewinnt.

11. Verfahren nach einem der vorangehenden Ansprüchen, **dadurch gekennzeichnet, dass** man als Olefinkomponete Hexadecen-1 einsetzt.

## Claims

1. Process for producing a C₃- to C₂₀-alkyltrialkoxysilane by hydrosilylation, wherein alkoxy represents methoxy, ethoxy or propoxy,
comprising
- initially charging a mixture of at least one hydroalkoxysilane from the group of hydrotrialkoxysilane, hydroalkyldialkoxysilane, hydrodialkylalkoxysilane and a Pt catalyst,
- heating the mixture to a temperature of 30°C to 60°C,
- subsequently, with mixing, adding/metering an omega-unsaturated or mono-unsaturated C₃- to C₂₀-hydrocarbon, at least one carboxylic acid and at least one alcohol as cocatalysts,
- reacting the mixture and subsequently working up the thus-obtained product mixture.

2. Process according to Claim 1, **characterized in that** H-silane and alcohol are employed in a molar ratio of 1:0.01 to 0.2, preferably 1:0.02 to 0.18, particularly preferably 1:0.03 to 0.15, very particularly preferably 1:0.04 to 0.1, in particular 1:0.05 to 0.06.

3. Process according to Claim 1 or 2, **characterized in that**
H-silane and Pt are employed in a molar ratio of 1:1 x 10⁻⁴ to 1 x 10⁻⁹, preferably 1:1 x 10⁻⁵ to 3 x 10⁻⁸, especially 1:1 x 10⁻⁵ to 9.0 x 10⁻⁶.

4. Process according to any of the preceding claims, **characterized in that**
H-silane and carboxylic acid are employed in a molar ratio of 1:1 x 10⁻³ to 10 x 10⁻³, preferably 1:2 x 10⁻³ to 8 x 10⁻³, in particular 1:2 x 10⁻³ to 6 x 10⁻³.

5. Process according to any of the preceding claims, **characterized in that**
H-silane and olefin component are employed in a molar ratio of 1:1 to 1.2, preferably of 1:1.05 to 1.2.

6. Process according to any of the preceding claims, **characterized in that**
the carboxylic acid is selected from the group of benzoic acid, 3,5-di-tert-butylbenzoic acid, 3,5-di-tert-butyl-4-hydroxybenzoic acid.

7. Process according to any of the preceding claims, **characterized in that**
the alcohol is selected from the group of C₁-C₁₀-alcohols, preferably t-butanol.

8. Process according to any of the preceding claims, **characterized in that**
the H-silane employed is hydrotrimethoxysilane (TMOS), hydrotriethoxysilane (TEOS), methyldiethoxysilane (DEMS), methyldimethoxysilane (DMMS), dimethylethoxysilane (DMES), dimethylmethoxysilane (MDMS), hydrotripropoxysilane, hydromethyldipropoxysilane and/or hydrodimethylpropoxysilane.

9. Process according to any of the preceding claims, **characterized in that**
it comprises employing a Pt catalyst from the group of "Karstedt catalyst", preferably platinum(0) 1,3-divinyl-1,1,3,3-tetramethyldisiloxane complex, in particular as a "Karstedt catalyst" in xylene or toluene with a Pt(0) content of 0.5% to 5% by weight, hexachloroplatinic(IV) acid, preferably "Speyer catalyst", in particular hexachloroplatinic(IV) acid dissolved in acetone, or Pt applied to a solid catalyst support, preferably Pt supported on activated carbon.

10. Process according to any of the preceding claims, **characterized in that**
it comprises
- initially charging and heating the components H-silane and Pt catalyst as a mixture,
- combining the olefin component, the carboxylic acid and the alcohol and metering the mixture containing the olefin component, the carboxylic acid and the alcohol into the initial charge with mixing over a period of 1 to 10 hours at a temperature in the initial charge of 30-60°C and
- subsequently post-reacting the mixture over a period of 0.2 to 2 hours, wherein the reaction is preferably performed under protective gas, in particular under nitrogen, wherein any heterogeneous catalyst present may optionally be removed from the thus-obtained product mixture,
- the subsequent distillative workup of the obtained product mixture is preferably performed at 45-150°C and a reduced pressure, in particular to remove from the product mixture any low boilers present, for example xylene/toluene, alcohol, carboxylic acid, excess H-silane and any olefin component present, and to obtain the (target) product.

11. Process according to any of the preceding claims, **characterized in that**
1-hexadecene is employed as the olefin component.

## Revendications

1. Procédé pour la préparation d'un C₃-C₂₀-alkyltrialcoxysilane par hydrosilylation, alcoxy représentant méthoxy, éthoxy ou propoxy, dans lequel
- on dispose au préalable un mélange d'au moins un hydrogénoalcoxysilane de la série hydrogénotrialcoxysilane, hydrogénoalkyldialcoxysilane, hydrogénodialkylalcoxysilane et d'un catalyseur à base de Pt,
- on chauffe le mélange à une température de 30 à 60°C
- on ajoute ou on dose ensuite, en mélangeant, un C₃-C₂₀-hydrocarbure insaturé en position oméga ou monoinsaturé, au moins un acide carboxylique et au moins un alcool en tant que cocatalyseurs,
- on laisse réagir et on traite ensuite le mélange produit ainsi obtenu.

2. Procédé selon la revendication 1, **caractérisé en ce qu'**on utilise le H-silane par rapport à l'alcool dans un rapport molaire de 1:0,01 à 0,2, de préférence de 1:0,02 à 0,18, de manière particulièrement préférée de 1:0,03 à 0,15, de manière tout particulièrement préférée de 1:0,04 à 0,1, en particulier de 1:0,05 à 0,06.

3. Procédé selon la revendication 1 ou 2, **caractérisé en ce qu'**on utilise le H-silane par rapport au Pt dans un rapport molaire de 1:1 x 10⁻⁴ à 1 x 10⁻⁹, de préférence de 1:1 x 10⁻⁵ à 3 x 10⁻⁸, en particulier de 1:1 x 10⁻⁵ à 9,0x10⁻⁶.

4. Procédé selon l'une quelconque des revendications précédentes, **caractérisé en ce qu'**on utilise le H-silane par rapport à l'acide carboxylique dans un rapport molaire de 1:1 x 10⁻³ à 10 x 10⁻³, de préférence de 1:2 x 10⁻³ à 8 x 10⁻³, en particulier de 1:2 x 10⁻³ à 6 x 10⁻³.

5. Procédé selon l'une quelconque des revendications précédentes, **caractérisé en ce qu'**on utilise le H-silane par rapport au composant oléfinique dans un rapport molaire de 1:1 à 1,2, de préférence de 1:1,05 à 1,2.

6. Procédé selon l'une quelconque des revendications précédentes, **caractérisé en ce qu'**on choisit l'acide carboxylique dans la série acide benzoïque, acide 3,5-di-tert-butylbenzoïque, acide 3,5-di-tert-butyl-4-hydroxybenzoïque.

7. Procédé selon l'une quelconque des revendications précédentes, **caractérisé en ce qu'**on choisit l'alcool dans la série des C₁-C₁₀-alcools, de préférence le t-butanol.

8. Procédé selon l'une quelconque des revendications précédentes, **caractérisé en ce qu'**on utilise, comme H-silane, l'hydrogénotriméthoxysilane (TMOS), l'hydrogénotriéthoxysilane (TEOS), le méthyldiéthoxysilane (DEMS), le méthyldiméthoxysilane (DMMS), le diméthyléthoxysilane (DMES), le diméthylméthoxysilane (MDMS), l'hydrogénotripropoxysilane, l'hydrogénométhyldipropoxysilane et/ou l'hydrogénodiméthylpropoxysilane.

9. Procédé selon l'une quelconque des revendications précédentes, **caractérisé en ce qu'**on utilise un catalyseur à base de Pt de la série des catalyseurs de "Karstedt", de préférence le complexe platine(0)-1,3-divinyl-1,1,3,3-tétraméthyldisiloxane, en particulier sous forme de catalyseur de "Karstedt" dans du xylène ou du toluène à une teneur en Pt(0) de 0,5 à 5% en poids, l'acide hexachloroplatinique(IV), de préférence le catalyseur de "Speyer", en particulier l'acide hexachloroplatinique(IV) dissous dans de l'acétone, ou du Pt appliqué sur un support catalytique solide, de préférence du Pt supporté sur du charbon actif.

10. Procédé selon l'une quelconque des revendications précédentes, **caractérisé en ce que**
- on dispose au préalable les composants H-silane et le catalyseur à base de Pt sous forme de mélange et on le chauffe,
- on réunit le composant oléfinique, l'acide carboxylique et l'alcool et on dose le mélange contenant le composant oléfinique, l'acide carboxylique et l'alcool à une température de la charge de 30-60°C tout en mélangeant sur une période de 1 à 10 heures dans la charge et
- on laisse ensuite post-réagir sur une période de 0,2 à 2 heures, on réalise de préférence la transformation sous gaz de protection, en particulier sous azote, éventuellement, si un catalyseur hétérogène est présent, celui-ci peut être éliminé du mélange produit obtenu,
- on réalise le traitement consécutif par distillation du mélange produit obtenu de préférence à 45-150°C et sous une pression réduite, la fraction à bas point d'ébullition présente, par exemple le xylène ou le toluène, l'alcool, l'acide carboxylique, le H-silane en excès ou le cas échéant le composant oléfinique, étant de préférence éliminée du mélange produit et obtient le produit (cible).

11. Procédé selon l'une quelconque des revendications précédentes, **caractérisé en ce qu'**on utilise, comme composant oléfinique l'hexadécène-1.
